(19) Europäisches Patentamt
European Patent Office
Office européen des brevets

(11) Veröffentlichungsnummer: **0 138 046**
**A2**

(12) # EUROPÄISCHE PATENTANMELDUNG

(21) Anmeldenummer: **84110761.8**

(22) Anmeldetag: **10.09.84**

(51) Int. Cl.⁴: **C 08 G 63/64**

(30) Priorität: **20.09.83 DE 3333864**

(43) Veröffentlichungstag der Anmeldung: **24.04.85 Patentblatt 85/17**

(84) Benannte Vertragsstaaten: **DE FR GB IT NL**

(71) Anmelder: **BAYER AG, Konzernverwaltung RP Patentabteilung, D-5090 Leverkusen 1 Bayerwerk (DE)**

(72) Erfinder: **Tacke, Peter, Dr., Brandenburger Strasse 12, D-4150 Krefeld 12 (DE)**

(54) **Verfahren zur Herstellung von aromatischen Polyestercarbonaten.**

(57) Bischlorkohlensäureester von Diphenolen reagieren mit aromatischen Dicarbonsäuren in der Schmelze oder in hochsiedenden inerten organischen Lösungsmitteln auch in Abwesenheit von Basen, wie z. B. tertiären Aminen, zu Polyestercarbonaten.

EP 0 138 046 A2

BAYER AKTIENGESELLSCHAFT 5090 Leverkusen, Bayerwerk
Konzernverwaltung RP
Patentabteilung Pv/Ke-c

Verfahren zur Herstellung von aromatischen Polyestercarbonaten

Die Erfindung betrifft ein Verfahren, bei dem aromatische Dicarbonsäuren mit Bischlorkohlensäureestern von Diphenolen in der Schmelze oder in hochsiedenden inerten Lösungsmitteln unter Entstehung von Polyestercarbonaten und Entwicklung von Chlorwasserstoff und Kohlendioxid zur Reaktion gebracht werden.

Aromatische Polyestercarbonate sind bekannt. Sie vereinigen in sich die vorteilhaften Eigenschaften aromatischer Polyester und aromatischer Polycarbonate. Für die Herstellung aromatischer Polyestercarbonate stehen verschiedene Verfahren zur Verfügung:

Das Schmelzumesterungsverfahren der DE-AS 27 04 315 ist mit dem Nachteil verbunden, daß die entstehenden Produkte nicht farblos sind.

Die DE-OS 27 58 030 und die US-PS 41 30 548 betreffen Phasengrenzflächenverfahren, die zwar zu farblosen Produkten führen, jedoch als Nebenprodukt große Mengen Alkalichlorid entstehen lassen, deren Beseitigung aus ökologischen Gründen immer schwieriger wird.

Die europäische veröffentlichte Patentanmeldung 10 840 betrifft ein Phasengrenzflächenverfahren bzw. ein Lösungsverfahren zur Herstellung von Polyestercarbonaten. Für das Phasengrenzflächenverfahren gilt das oben Gesagte; die Rentabilität des Lösungsverfahrens hängt u.a. davon ab, daß das als Lösungsmittel und Säureakzeptor eingesetzte tertiäre Amin zurückgewonnen werden kann. Bei der Rückgewinnung der tertiären Amine fallen jedoch ebenfalls große Mengen Alkalichlorid an.

Die US-PS 32 20 976 lehrt die Umsetzung von Bischlorkohlensäureestern von Diphenolen mit aromatischen Dicarbonsäuren in tertiären Aminen als Lösungsmittel und Säureakzeptoren. Auch hier werden mit der Rückgewinnung der Amine große Mengen Alkalichlorid produziert.

Es wurde überraschend gefunden, daß Bischlorkohlensäureester von Diphenolen in der Schmelze oder in hochsiedenden inerten Lösungsmitteln auch in Abwesenheit von Basen, wie z.B. tertiären Aminen, mit aromatischen Dicarbonsäuren unter Entwicklung von Chlorwasserstoff und Kohlendioxid zu Polyestercarbonaten reagieren. Der als Nebenprodukt erhaltene Chlorwasserstoff stellt einen wesentlich wertvolleren Rohstoff als Alkalichlorid dar.

Gegenstand der Erfindung ist ein Verfahren zur Herstellung voll-aromatischer Polyestercarbonate aus aromatischen Dicarbonsäuren und Bischlorkohlensäureestern von Diphenolen, gegebenenfalls Verzweigungsmitteln und gegebenenfalls Kettenabbrechern, dadurch gekennzeichnet, daß man pro Mol aromatische Dicarbonsäure 0,95 bis 3, vorzugsweise 1,1 bis 2, insbesondere 1,2 bis 1,8, Mol Bischlorkohlensäureester in Abwesenheit basischer Lösungsmittel und gegebenenfalls in Anwesenheit von Katalysatoren in der Schmelze oder in einem inerten organischen Lösungsmittel mit einem Siedepunkt über 130°C bei Temperaturen von 130 bis 250°C, vorzugsweise von 160 bis 210°C, umsetzt.

Bevorzugte aromatische Dicarbonsäuren sind Iso- und Terephthalsäure. Nach einer bevorzugten Ausführungsform werden sie im Verhältnis 7 : 3 bis 3 : 7 eingesetzt.

Bischlorkohlensäureester von Bisphenolen sind bekannt. Ihre Herstellung kann beispielsweise gemäß DE-OS 24 10 668 oder 24 10 743 erfolgen.

Bevorzugte Diphenole sind z.B. solche, wie sie in der DE-OS 30 07 934 beschrieben sind. Besonders bevorzugte Diphenole sind Bisphenol-A, Tetramethylbisphenol A, 1,1-Bis-(4-hydroxyphenyl)-isobutan und -cyclohexan, 4,4'-Dihydroxydiphenylsulfid und -sulfon sowie deren di- und tetrahalogenierten Derivate.

Bevorzugte Verzweigungsmittel sind ebenfalls in der DE-OS 30 07 934 beschrieben.

Bevorzugte Kettenabbrecher zur Begrenzung des Molekulargewichtes sind aliphatische und aromatische Monocarbonsäuren sowie Monophenole, Chlorkohlensäureester von Monophenolen und Säurechloride aromatischer Monocarbonsäuren. Die aromatischen Ringe der Kettenabbrecher können bis zu 2 verzweigte und/oder unverzweigte Alkylsubstituenten mit je 1 - 18 C-Atomen tragen. Die Kettenabbrecher können in Mengen von 1 bis 10, vorzugsweise von 2 bis 6, Mol-%, bezogen auf eingesetzten Bischlorkohlensäureester, eingesetzt werden.

Gegebenenfalls können Kettenabbrecher und Verzweiger erst während der Nachkondensation zum Einsatz gelangen.

Bevorzugte inerte organische Lösungsmittel sind z.B. Chlorbenzol, Dichlorbenzole, Xylole, Mesitylen, Diphenylether.

Das erfindungsgemäße Verfahren kann durch Metallhalogenide, Metalloxide, Phosphorverbindungen und Schwefel in Mengen von 0,01 bis 1 Gew.-%, bezogen auf eingesetzte aromatische Dicarbonsäure, katalysiert werden. Besonders bevorzugte Katalysatoren sind z.B. Kupfer(II)-chlorid, Zinkchlorid, Magnesiumchlorid, Mangan(II)-chlorid, Calciumchlorid, Zinn(II)-chlorid, Arsenchlorid, Antimon (II)- bzw. Antimon(V)-chlorid, Eisen(III)-chlorid, Cobaltchlorid, Nickelchlorid, Antimontrioxid, Phosphortrichlorid, Phosphoroxychlorid, Triphenylphosphin.

Eine im Überschuß eingesetzte Reaktionskomponente bleibt nach Reaktionsende übrig. Bei Verwendung eines Überschusses von Bischlorkohlensäureester sind nach der Reaktion noch freie Chlorcarbonyloxygruppen vorhanden, die das Reaktionsprodukt für den direkten Einsatz unbrauchbar machen. In diesen Fällen ist eine Nachkondensation nach

dem Phasengrenzflächenverfahren empfehlenswert, wie es z.B. in der DE-OS 30 07 934 beschrieben ist.

Die nach dem erfindungsgemäßen Verfahren hergestellten Polyestercarbonate können bis zu 10 Mol-%, bezogen auf die Summe von Ester- und Carbonatgruppen, Anhydridgruppen enthalten.

Der Gehalt an Carbonatgruppen ist im wesentlichen durch das Verhältnis aromatischer Dicarbonsäure/Bischlorkohlensäureester vorgegeben und liegt in der Regel bei 20 bis 35 Mol-%, bezogen auf die Summe von Ester- und Carbonatgruppen. Durch ein nachgeschaltetes Phasengrenzflächenverfahren kann er jedoch weiter erhöht werden.

Die nach dem erfindungsgemäßen Verfahren hergestellten Polyestercarbonate können, gegebenenfalls nach Zusatz von Stabilisatoren, Fließmitteln, Weichmachern, Entformungsmitteln, Füll- und Verstärkungsstoffen, wie z.B. Glasfasern, Glaskugeln, Asbest- und Kohlenstoffasern, Kieselgur, Kaolin, Gesteinsmehl und Pigmenten, nach üblichen Verfahren in Spritzgießmaschinen zu Formkörpern oder in Extrudern zu Halbzeug verarbeitet werden.

Beispiele:

Beispiel 1

In einem mit Rührer und Gasableitungsrohr ausgerüsteten Glaskolben wurden 353 g (1 Mol) Bischlorkohlensäureester von Bisphenol A, je 66,5 Iso- und Terephthalsäure (je 0,4 Mol) sowie je 0,1 g Antimon-trioxid und Triphenylphosphin gegeben und das Gemisch nach dem Aufschmelzen des Bischlorkohlensäureesters 6 Stunden bei 190°C gerührt. Es entwichen in großen Mengen Chlorwasserstoff und Kohlendioxid. Die zunächst in der Schmelze dispergierten Dicarbonsäuren lösten sich langsam auf.

Die Schmelze erstarrte beim Abkühlen zu einem spröden Festkörper, der sich fast vollständig in 4 l Dichlormethan löste. Nach Abfiltrieren restlicher Dicarbonsäure wurden zum Filtrat 35 g Bisphenol A-bischlorkohlensäureester, 3 g Trietylamin, 5 g p-tert. Butylphenol (3 Mol-%, bezogen auf eingesetzten Bischlorkohlensäureester) und 7 l Wasser gegeben. Unter kräftigem Rühren des Gemisches wurde der pH-Wert der wäßrigen Phase mit wäßriger NaOH auf 12 - 13 gebracht und für 30 Minuten so gehalten.

Nach der Trennung der Phasen wurde die organische mit verdünnter Phosphorsäure neutral gestellt, dann mit Wasser elektrolytfrei gewaschen. Die Abtrennung des erhaltenen Polyestercarbonates erfolgte durch Ausfällung mit Cyclohexan aus der auf ca. 15 Gew.-% Feststoffgehalt eingeengten Dichlormethan-Lösung.

Das in feinkörniger Form abgeschiedene fast farblose Produkt besaß eine relative Viskosität (gemessen an einer Lösung von 0,5 g Substanz in 100 ml Dichlormethan-Lösung) von 1,283.

Durch Differentialthermoanalyse wurde eine Glastemperatur von 178°C gemessen.

Das Produkt besaß einen Estergruppengehalt von 68,7 Mol-%, bezogen auf die Summe von Ester- und Carbonatgruppen.

Beispiel 2

Bei einer Reaktion analog Beispiel 1 wurden während der 1. Stufe 500 ml Mesitylen-Gemisch zugesetzt und die Reaktionstemperatur auf diese Weise auf ca. 165°C begrenzt. Die Reaktionszeit betrug in diesem Falle 16 Stunden. Das Reaktionsgemisch wurde dann mit der in Beispiel 1 angegebenen Menge Dichlormethan verdünnt und wie dort weiterverarbeitet.

Die relative Viskosität des erhaltenen Polyestercarbonates betrug 1,267, die Glastemperatur 176°C.

Patentansprüche:

1. Verfahren zur Herstellung voll-aromatischer Polyestercarbonate aus aromatischen Dicarbonsäuren und Bischlorkohlensäureestern von Diphenolen, gegebenenfalls Verzweigungsmitteln und gegebenenfalls Kettenabbrechern, dadurch gekennzeichnet, daß man pro Mol aromatische Dicarbonsäure 0,95 bis 3 Mol Bischlorkohlensäureester in Abwesenheit basischer Lösungsmittel und gegebenenfalls in Anwesenheit von Katalysatoren in der Schmelze oder in einem inerten organischen Lösungsmittel mit einem Siedepunkt über 130°C bei Temperaturen von 130 bis 250°C umsetzt.

2. Verfahren nach Anspruch 1, dadurch gekennzeichnet, daß man pro Mol aromatische Dicarbonsäure 1,1 bis 2 Mol Bischlorkohlensäureester einsetzt.

3. Verfahren nach Ansprüchen 1 und 2, dadurch gekennzeichnet, daß man pro Mol aromatische Dicarbonsäure 1,2 bis 1,8 Mol Bischlorkohlensäureester einsetzt.

4. Verfahren nach Ansprüchen 1 bis 3, dadurch gekennzeichnet, daß die Temperatur 160 bis 210°C beträgt.